# EUROPEAN PATENT APPLICATION

(11) **EP 4 708 172 A1**
(43) Date of publication of application: **11.03.2026**
(21) Application number: 24198921.9
(22) Date of filing: 06.09.2024
(51) Int. Cl.: G06Q 20/38, G06Q 20/40, H04W 36/16, H04W 36/22

(54) **5G SECURE TOKEN ENROLLMENT USING SLICING CAPABILITIES**

(71) Applicant: MasterCard International Incorporated, Purchase, NY 10577 (US)
(72) Inventor: Santos, Rudolfo Antonio Ribeiro, 2560-430 Lisbon (PT)
(74) Representative: Barker Brettell LLP

(57) **Abstract**

The present invention relates to a computer-implemented method for providing secure token enrolment, the method comprising receiving over a communication network 104, at a network selector server 110 associated with a payment network 108, a first token enrolment request message from a user device 102, determining, at the network selector server 110, a feature of the communication network 104, sending a request message, from the network selector server 110 to the user device 102, based on the determined feature of the communication network 104, instructing the user device 102 to connect to a 5G network slice 106a-c associated with a 5G Network 106, receiving over the 5G network slice 106a-c, at the network selector server 110, a second token enrolment request message from the user device 102, determining, at the network selector server 110, a feature of the 5G network slice 106a-c, determining, at the network selector server 110, based on the determined feature of the 5G network slice 106a-c, whether to approve the second token enrolment request message.

## Description

### Field

The present invention relates to systems and methods for providing secure and reliable token enrolments.

### Background

Tokenisation of payment cards is a widely used tool to protect customers and banks from hackers. When a payment card is tokenised, a token is created, to replace the payment card information during a transaction. This minimises the risks of data breach during the transaction, because the actual card information is not shared when, for instance, the card is tapped at a payment terminal or a payment is made through a mobile app.

Although tokenised cards represent a valuable tool to minimise risk of data breach, eavesdropping can still occur during token enrolment, i.e., when a token enrolment request is sent from a user to a payment network. Furthermore, if a network is heavily trafficked, there might not be sufficient capacity to perform the token enrolment, which might therefore fail. At the moment, users tokenise cards on the network they are already connected to with no consideration to security and/or its traffic. This can cause disruptions and be inconvenient to consumers and result in a security risk.

It would therefore be desirable to have a system and a method to alleviate these problems relating to potential security and availability issues of networks for token enrolment.

### Summary of Invention

According to an aspect of the invention there is provided a computer-implemented method for providing secure token enrolment, the method comprising: receiving over a communication network, at a network selector server associated with a payment network, a first token enrolment request message from a user device; determining, at the network selector server, a feature of the communication network; sending a message, from the network selector server to the user device, based on the determined feature of the communication network, instructing the user device to connect to a 5G network slice associated with a 5G Network; receiving over the 5G network slice, at the network selector server, a second token enrolment request message from the user device; determining, at the network selector server, a feature of the 5G network slice; determining, at the network selector server, based on the determined feature of the 5G network slice, whether to approve the second token enrolment request message.

Advantageously, the present invention introduces a network selector server which conducts an assessment of a token enrolment request message sent from a user device over a communication network. In this way, the network selector server may evaluate whether a communication network that the user device is connected to is suitable for providing effective and secure token enrolment. This may be done by determining a feature of the communication network. The feature may be indicative of the security, the availability or the capability of the communication network to process a token enrolment request and perform, effectively and securely, a token enrolment accordingly to said request.

Enhanced security of the token enrolment may be provided by sending, from the network selector server, a request message, to the user device, to connect to a 5G network slice associated with a 5G network, before performing the token enrolment. The 5G network slice may provide a more secure channel (e.g., better protected from eavesdropping) over which to perform token enrolment. For example, the 5G network may have better security mechanisms in place to prevent or at least minimise the chances of eavesdropping, with respect to the communication network, which may be, for instance, a public Wi-Fi network. Furthermore, sliced networks, such as a 5G sliced network, may ensure maximum utilization efficiency of network resources. For example, a 5G network may be sliced such that a specific 5G network slice of the 5G network is reserved to perform token enrolment, and is not used to perform any other task. Other slices of the 5G network may be reserved to tasks other than token enrolment, and each slice may be reserved for a specific task. In this way, by connecting to the 5G network slice, the user device may benefit of differentiated quality of services, which can be on guaranteed bandwidth, reduced latencies or a more secure connection. Furthermore, 5G network slicing may guarantee priority of service to a user device, based on urgency or other criteria. For example, a specific 5G network slice may be considered to be a "premium" 5G network slice, which is reserved for performing token enrolment on behalf of a limited group of users, such as customers of a specific network provider. Therefore, by requesting the user device to connect to a 5G network slice, the network selector server provides a trusted network with enhanced security and guarantee of delivery for processing a token enrolment.

Advantageously, an assessment of the 5G network slice is provided by determining, at the network selector server, a feature associated with the 5G network slice. In this way, the network selector server may verify whether the 5G network slice is suitable to perform a token enrolment effectively and securely, and whether the second token enrolment request message should be consequently approved.

In some arrangements, the user device may only need to connect to the 5G network slice if the network selector server determines, based on the feature of the communication network, that the connection to the 5G network slice is necessary to perform secure and effective token enrolment. For example, the network selector server may determine, based on the feature of the communication network, that the token enrolment may be performed securely and effectively over the communication network. In this way, a high degree of flexibility is provided without sacrificing security standards. Another advantage may be that the 5G network slice is unlikely to be overloaded with requests to perform token enrolment, if the request to connect to a 5G network slice is evaluated case-by-case.

In some arrangements, the computer-implemented method further comprises the step of approving, at the network selector server, based on the feature of the 5G network slice, the second token enrolment request message. The network selector server may approve the second token enrolment request message if the network selector server determines that the token enrolment can be securely and/or effectively performed over the 5G network slice. In some instances, the method further comprises the step of sending, from the network selector server to the payment network, an approval message based on the feature of the 5G network slice. The approval message may contain information such as a date and time in which the second token enrolment request message has been approved, and in some examples may also include the feature. In this way, the payment network may extract the relevant information from the approval message, and store said information for use in determining whether to approve or disapprove future token enrolment request messages. The approval message may comprise instructions to perform the token enrolment.

Alternatively, the network selector server might determine that the 5G network slice is not suitable to perform the token enrolment safely and/or effectively. In this instance, the network selector server may disapprove the second token enrolment request message, based on the feature. In some instances, the network selector server may further send a message, to the payment network, instructing not to proceed with the token enrolment over the 5G network slice. For example, the network selector server may determine that it is not sufficiently safe for the token enrolment to be processed over the 5G network slice. In some arrangements, the network selector server may further request the user device to connect to another, different, 5G network slice. The network selector server may therefore assess the different 5G network slice, after receiving a third token enrolment request message from the user device, over the different 5G network slice, to determine whether to approve the third token enrolment request message. In some arrangements, the steps of the claimed computer-implemented method may be iterated for a predetermined number of times and, if after n steps, the network selector server has not found a suitable network, then the token enrolment request message will be disapproved. Alternatively, the steps may be iterated for an unlimited number of times, until a suitable network is found by the network selector server.

In some arrangements, after the step of determining, at the network selector server, whether to approve the second token enrolment request message, the method further comprises the steps of (i) sending a second request message, from the network selector server to the user device, based on the feature of the 5G network slice, instructing the user device to connect to an alternative 5G network slice associated with a 5G network. In this way, the user device may be instructed to connect to an alternative 5G network slice, in case, for example, the first 5G network slice is not available to perform a token enrolment. The method may further comprise the steps of (ii) receiving over the alternative 5G network slice, at the network selector server, a third token enrolment request message from the user, and (iii) determining, at the network selector server, a feature of the alternative 5G network slice, and (iv) determining, at the network selector server, based on the feature, whether to approve the third token enrolment request message. The method can then comprise the step of (v) authorising, at the network selector server, based on the feature of the alternative 5G network slice, the third token enrolment request message. Alternatively, the method steps (i) to (iv) may be iterated, until the network selector server, based on a feature of a final 5G network slice, approves a final token enrolment request message. According to some arrangements, the network selector server may be configured to notify the payment network that there is no available 5G network slice to perform the token enrolment over, for instance after a pre-determined number n of attempts to connect the user device to a 5G network slice. In some examples, the network selector server may determine that there is no secure and/or reliable 5G network slice available.

The computer-implemented method may further comprise the step of sending, from the network selector server to the payment network, instructions to perform the token enrolment. In this way, the token enrolment may be performed by the payment network. In some arrangements, the instructions comprise instructions to proceed with the digitization of a payment card associated with the user of the user device.

In some arrangements, after the network selector server has approved the token enrolment request message, and before proceeding with the digitization of the payment card, a payment network provider of the payment network may conduct a check of the eligibility of the user device. In this step, the payment network provider checks whether the user device is eligible to obtain a tokenised card associated with the payment card. The eligibility check may be based on details regarding the user's identity, or regarding the user's bank account and payment card for which the tokenisation has been requested. The eligibility check may be aimed at determining whether the user is a nefarious actor, attempting to interact with the payment network, or a legitimate payee. The eligibility check may be conducted over the payment network. For example, the payment network may request, to an issuer (i.e., a bank or other financial institution), information regarding the identity of the user and/or a bank account of the user. The issuer may respond by providing the requested information to the payment network. These steps to carry out an eligibility check on the user further enhance the trust of the token enrolment process.

The eligibility check may be conducted by the payment network provider in parallel with the risk analysis conducted by the network selector server, maximising computational efficiency. Alternatively, the eligibility check of the user device can be carried out and completed by the payment network provider before the network selector server approves the second token enrolment, which may filter out requests which can be deemed risky without needing the assessment from the network selection server. In this way, the process may be less computationally intensive. In some arrangements, the steps of the claimed method are carried out by the network selector server in a way which is completely agnostic to the token enrolment process carried out by the payment network.

In some arrangements, the step of determining a feature of the communication network comprises the step of identifying, at the network selector server, a parameter associated with the token enrolment request message, wherein the parameter is indicative of the feature of the communication network. In some arrangements, the network selector server may use an algorithm to identify the parameter of the token enrolment request message. The step of sending the request message instructing the user device to connect to the 5G network slice may be based on a comparison of the parameter and a pre-determined parameter.

In some arrangements, the step of determining a feature of the 5G network slice comprises the step of identifying, at the network selector server, a parameter associated with the second token enrolment request message, wherein the parameter is indicative of the feature of the 5G network slice. In some arrangements, the step of determining whether to approve the second token enrolment request message is based on a comparison of the parameter to a pre-determined parameter.

In this way, the parameter can be compared with expected values of said parameter. For example, a certain parameter of the communication network might be expected to be below a threshold, for the network selector server to determine that the network is sufficiently safe. Similarly, a certain parameter of the communication network might be expected to be above a certain threshold, for the network selector server to determine that the network has sufficient capability to perform the token enrolment. Advantageously, the network selector server may set the pre-determined parameter on which to base the comparison. The pre-determined parameter may change over time or be static, depending on the circumstances. The pre-determined parameter can be identified by the network selector server, or by the payment network provider or any other entity.

According to some arrangements, the network selector server may select the 5G network slice based on a characteristic of the 5G network slice. In this way, the network selector server may select the most appropriate 5G network slice to process the token enrolment. Advantageously, various characteristics of the 5G network slice can be selected for this purpose. More than one characteristic of the 5G network slice may be evaluated. The characteristic may be a single-network slice selection assistance information (S-NSSAI). In some examples, the single-network slice selection assistance information may comprise information on the slice/service type and an optional "slice differentiator". In this way, the network selector server may identify each slice of the 5G network by the single-network slice selection assistance information.

A feature of the communication network may be one of a feature indicative of security, a feature indicative of network traffic or a feature indicative of network capability. In some arrangements, a feature of the 5G network slice is one of a feature indicative of security, a feature indicative of network traffic or a feature indicative of network capability. In this way, the network selector server may assess whether the network (either the communication network or the 5G network slice, or both) is suitable for performing token enrolment. Advantageously, the suitability of the network may be based on specific criteria. For example, the network selector server may assess whether the network is sufficiently secure and/or whether the network has sufficient capability for performing a token enrolment effectively, preferably at the first attempt. For example, the network selector server may assess whether the communication network is capable of performing the token enrolment in a timely manner, through the evaluation of a feature indicative of network traffic. In another example, the network selector server may assess whether the communication network or the 5G network has the right capability to perform the token enrolment. In some arrangements, the network selector server may determine a feature which may be indicative of more than one of network security, network traffic or network capability. In some arrangements, the feature may be indicative of information other than network security, network traffic or network capability. In some arrangements, more than one feature may be determined by the network selector server.

The computer-implemented method may further comprise the step of sending instructions, from the network selector server to the user device, instructing the user device to disconnect from the communication network. In this way, security may be enhanced. The user device may be instructed to disconnect from the communication network before or after connecting to the 5G network slice of the 5G network.

Alternatively, the connection of the user device with the communication network might, in some instances, be maintained after the user device connects to the 5G network slice. In this way, other functions may be performed, at the user device, over the communication network, in parallel with the token enrolment process over the 5G network slice.

The communication network may be a Wi-Fi network. Alternatively, the communication network may be a 5G network slice, or a 4G or 5G network. In some instances, the communication network might be a 5G network slice, which, despite having good security mechanisms in place, might still be deemed unsuitable by the network selector server. For example, the 5G network slice may be unavailable to process the token enrolment request due to high network traffic or a lack of capabilities to perform this specific service. In some alternative arrangements, the communication network may be based on Ethernet technology. In some instances, the communication network may be a WiMax network.

In some arrangements, the network selector server is part of the payment network. In this way, the payment network provider may control the network selector server through the payment network. Alternatively, the network selector server is independent from the payment network. In this way, the same network selector server may be adapted to work with different payment network providers.

The 5G network may be part of the payment network. In this way, the payment network provider may control the 5G network. In some instances, the payment network provider may own the 5G network. In some arrangements, there may be provided a `premium; 5G network slice, which is reserved to exclusively perform token enrolments which are associated with token enrolment request messages that have been approved at the network selector server. In this way, the user device may benefit from a privileged channel to process token enrolment. This can further enhance reliability and security.

According to a further aspect of the invention, there is provided a system for providing secure token enrolment, the system configured to: receive over a communication network, at a network selector server associated with a payment network, a first token enrolment request message from a user device; determine at the network selector server, a feature of the communication network; send a request message, from the network selector server to the user device, based on the determined feature of the communication network, instructing the user device to connect to a 5G network slice associated with a 5G Network; receive over the 5G network slice, at the network selector server, a second token enrolment request message from the user device; determine, at the network selector server, a feature of the 5G network slice; determine, at the network selector server, based on the determined feature of the 5G network slice, whether to approve the second token enrolment request message.

The system may be configured to perform any of the above-mentioned method steps according to the above aspects of the invention. The system comprises a network selector server. The system may further comprise a user device, and/or a payment network.

According to a further aspect of the invention, there is provided a non-transitory computer-readable medium comprising instructions which, when executed by a computer, cause the computer to: receive over a communication network, at a network selector server associated with a payment network, a first token enrolment request message from a user device; determine at the network selector server, a feature of the communication network; send a request message, from the network selector server to the user device, based on the determined feature of the communication network, instructing the user device to connect to a 5G network slice associated with a 5G Network; receive over the 5G network slice, at the network selector server, a second token enrolment request message from the user device; determine, at the network selector server, a feature of the 5G network slice; determine, at the network selector server, based on the determined feature of the 5G network slice, whether to approve the second token enrolment request message.

The non-transitory computer-readable medium may comprise instructions which, when executed by a computer, cause the computer to perform any of the above-mentioned method steps according to the above aspects of the invention.

According to a further aspect of the invention, there is provided a computer-program product comprising instructions which, when executed by a computer, cause a computer to: receive over a communication network, at a network selector server associated with a payment network, a first token enrolment request message from a user device; determine at the network selector server, a feature of the communication network; send a request message, from the network selector server to the user device, based on the determined feature of the communication network, instructing the user device to connect to a 5G network slice associated with a 5G Network; receive over the 5G network slice, at the network selector server, a second token enrolment request message from the user device; determine, at the network selector server, a feature of the 5G network slice; determine, at the network selector server, based on the determined feature of the 5G network slice, whether to approve the second token enrolment request message.

The computer program product may comprise instructions which, when executed by a computer, cause the computer to perform any of the above-mentioned method steps according to the above aspects of the invention.

According to a further aspect of the invention, there is provided a method for providing secure token enrolment, the method comprising: sending over a communication network, from a user device, a first token enrolment request message to a network selector server associated with a payment network; receiving a message, at the user device, from the network selector server, based on a feature of the communication network, the feature being determined by the network selector server; wherein the request message instructs the user device to connect to a 5G network slice associated with a 5G network; and sending over the 5G network slice, from the user device, a second token enrolment request message to the network selector server; wherein the network selector server is configured to determine a feature of the 5G slice and determine, based on the feature, whether to approve the second token enrolment request message.

### Description of Figures

The present invention is described below, by way of example only, with reference to the accompanying drawings, in which:
Figure 1 shows a schematic block diagram of a system, comprising a network selector server, for providing secure token enrolment of a payment card;
Figure 2 shows a schematic message flow diagram of a method for processing a request, sent from a user device, for token enrolment of a payment card, using the system of Figure 1;
Figure 3 shows a schematic message flow diagram of a method following on from the message flow in Figure 2, when providing authorisation to proceed with a token enrolment at the user device;
Figures 4a and 4b show a schematic message flow diagram of a method for registering, at a user device, a payment card, providing, at a network selector server, a secure network for token enrolment of the payment card, and for authorising, at a payment network, the token enrolment of the payment card;
Figure 5 shows a flow diagram of a computer-implemented method for providing secure token enrolment, performed by a network selector server, such as that shown in Figure 1;
Figure 6 shows a flow diagram of a computer-implemented method for providing secure token enrolment, performed by a user device, such as that shown in Figure 1; and
Figure 7 shows a data processing device, for executing instructions to perform any steps of the methods illustrated in Figures 2 to 6.

### Detailed Description

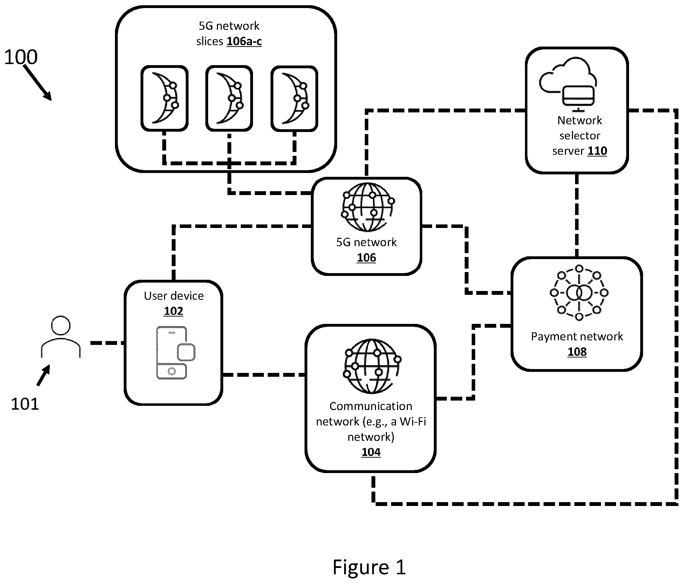

Figure 1 shows a schematic block diagram of a system 100, for providing secure token enrolment of a payment card at a user device 102. The system 100 is capable of performing the methods as disclosed herein. The system 100 comprises a user device 102. The user device 102 may be a mobile phone, or any other electronic device configured to store digital payment cards. The user device 102 may belong to user 101. For example, the user device 102 may be a user's mobile phone comprising an application, the application being connected to a wallet, the wallet having one or more digital payment cards belonging to the user 101. Each of the payment cards is connected to a bank account of the user 101, registered with an issuer (i.e., a bank or other financial institution, not shown in Figure 1). Each of the payment cards registered in the mobile app may be registered with a bank account belonging to a different issuer. The mobile application may be connected to a payment network provider, or to a plurality of payment network providers, such as Mastercard^{®} or Visa^{®}. An example of mobile application may be Google Pay^{®} and/or Apple Wallet^{®}.

The system 100 further comprises a communication network 104. The communication network 104 is preferably a Wi-Fi network (e.g., a private or public Wi-Fi network 104). Alternatively, the communication network 104 may be a 5G network, or a 5G network, or a 5G network slice of a 5G network. The user device 102 is configured to connect to the communication network 104. The user device 102 is configured to process token enrolment of a payment card belonging to the user 101 over the communication network 104. The communication network 104 may have security mechanisms in place, to prevent eavesdropping from nefarious actors of messages transmitted over the communication network 104. For example, the communication network 104 may be password protected. However, in some instances, the communication network 104 may be not password protected. The communication network 104 is typically protected by encryption mechanisms, i.e., mechanisms to encrypt messages sent from one entity to another over the communication network 104, such that eavesdroppers cannot access the content of said messages. Alternatively, the communication network 104 may not be protected by encryption mechanisms as described above. The communication network 104 may be protected by one of a plurality of different types of encryption mechanisms, which may provide a specific level of security to the network. For example, the communication network 104 may be protected by an encryption mechanisms which has not been updated for several months, or years, and that is based on encryption techniques which are considered, at a certain point in time, obsolete. The encryption mechanism may be obsolete in the sense that it may provide a degree of protection against eavesdropping which is not considered to be sufficient. For instance, the communication network 104 may be protected by an encryption mechanism which reduces the rate of eavesdropping by 10% compared to the rate for the same communication network 104 without the encryption mechanism in place. However, there may be encryption mechanisms which provide a higher reduction of eavesdropping and may, therefore, preferable.

The system 100 further comprises a 5G network 106. The 5G network 106 comprises one or more 5G network slices 106a-c. The 5G network 106 is therefore a sliced network. A sliced network is a network architecture that enables the creation of virtual, independent networks (i.e., "network slices") on the same physical network infrastructure. Each network slice 106a-c is an isolated network tailored to fulfil specific requirements requested by a particular application. In this way, the sliced network ensures maximum resource utilization efficiency. For example, a 5G network slice 106a-c of the 5G network 106 may be reserved to exclusively perform token enrolment, and no other operation. Other network slices 106a-c of the 5G network 106 may be reserved to specific tasks other than token enrolment. In this way, by connecting to a 5G network slice 106a-c of the 5G network 106, the user device 102 will benefit of differentiated quality of services, which can be on guaranteed bandwidth, reduced latencies or a more secure connection. Furthermore, 5G network slicing can guarantee priority of service to the user device 102, based on urgency or other criteria. For example, the user 101 may be part of a limited group of paying customers of the payment network provider, which are capable of accessing a premium 5G network slice of the 5G network 106 which is reserved for token enrolment operations requested by this limited group of customers.

The system 100 further comprises a network selector server 110 and a payment network 108. The network selector server 110 is associated with the payment network 108. The payment network 108 may be (but is not limited to) a Mastercard^{®} payment network. The payment network 108 may belong to a payment network provider (not shown). The payment network provider is a third party entity, which owns and provides the payment network 108 to customers. An example of payment network provider is Mastercard^{®}. In some arrangements, the network selector server 110 is part of the payment network 108. In this way, the payment network provider has direct access and control over the network selector server 110. The payment network provider may therefore have exclusive access to the network selector server 110, meaning that the network selector server 110 does not receive messages from any other payment network provider.

Alternatively, the network selector server 110 may be separate from the payment network 108. The network selector server 110 may be a server which is independent from, but in communication with, the payment network 108. In this way, one single network selector server 110 is interfaceable with other payment networks (not shown), belonging to different payment network providers.

The communication network 104 and the 5G network 106 are in communication with the payment network 108. In some arrangements, the 5G network 106 may be part of the payment network 108. In this way, the payment network provider of the payment network 108 may have control over a privileged communication channel (e.g., a 5G network slice 106a-c of the 5G network 106) to perform token enrolment. Alternatively, the 5G network 106 may be accessible by more than one payment network provider, which may have the advantage of providing a centralised network for secure token enrolment.

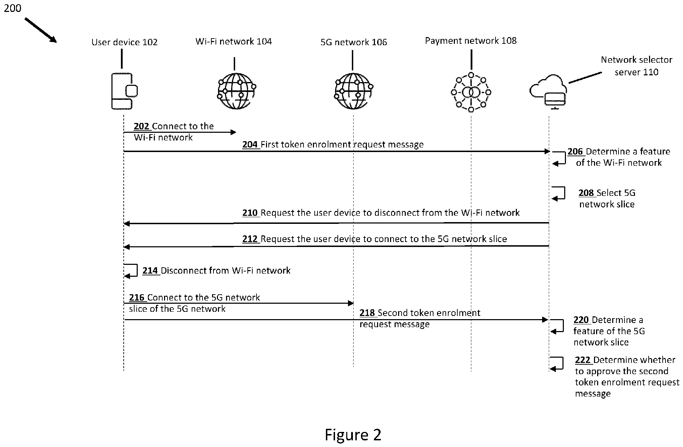

Figure 2 shows a message flow diagram of a method 200 for processing a request, sent from a user device 102, for token enrolment of a payment card, including a network selector server 110 for providing a network for secure token enrolment at the user device 102.

The user device 102 connects 202 to the Wi-Fi network 104 - this may be at the time of the token enrolment (i.e., when the user 101 is intending to request token enrolment of a payment card using the user device 102, or at an earlier point in time). The connection to the Wi-Fi network 104 is through conventional procedures known in the art that are not described here.

The user device 102 sends a first token enrolment request message 204, over the Wi-Fi network 104, to the network selector server 110. The first token enrolment request message 204 contains a request to perform a token enrolment of a payment card associated with the user device 102. The first token enrolment request message 204 may further comprise instructions to perform the token enrolment. The first token enrolment request message 204 may further comprise details of the user 101 (such as a retail customer) which is requesting the token enrolment, and/or details of the payment card for which token enrolment is requested. The first token enrolment request message 204 comprises information concerning the Wi-Fi network 104, for example the type of network, or an indication of the security mechanisms in place for the Wi-Fi network 104, a report of past eavesdropping incidents occurred on the Wi-Fi network 104, or the like. In this way, the first token enrolment request message 204 may be used by the network selector server 110 to carry out a risk assessment of the Wi-Fi network 104.

The network selector server 110 receives the first token enrolment request message and carries out an analysis of the Wi-Fi network 104. In particular, the network selector server 110 determines 206 a feature of the Wi-Fi network 104. For instance, the feature may be indicative of a security mechanisms of the Wi-Fi network 104, or be related to past network security threats which affected the Wi-Fi network 104. A network security threat may be a threat of an event within a network which leads to an unauthorised and/or illegitimate action, such as an unauthorised access, altering or movement of data within the network, or an undesired access, altering or movement of data within the network. The feature may be a rate of network security threats which have been carried out successfully by nefarious actors (i.e., entities whose aim it is to cause a network security threat) against the Wi-Fi network 104. The feature may be a rate of network security threats which have been carried out successfully by nefarious actors against the Wi-Fi network 104. In this way, the feature may be indicative of the safety of the Wi-Fi network 104. Alternatively, or in addition, the feature may be related to the network traffic, or the network capability for performing a token enrolment. In some scenarios, the Wi-Fi network 104 may be deemed sufficiently safe for performing token enrolment, but be unavailable because of excessive network traffic and/or because the Wi-Fi network 104 does not have the capability to perform a token enrolment effectively. For example, the Wi-Fi network 104 may be safe, but not have the capability to perform a token enrolment within a certain period of time. In some arrangements, the feature of the first token enrolment request message may be indicative of both security and availability of the network. The feature may therefore be used by the network selector server 110 to determine whether the user device 102 should connect to another, more suitable, network, to perform token enrolment safely and effectively.

The feature is preferably extracted from a header of the first token enrolment request message. However, any suitable means may be used to determine the feature the Wi-Fi network 104. Determining the feature may comprise selecting a feature over a plurality of features. The selection of a particular feature over a plurality of features may be based on a predictive model (such as an artificial intelligence (AI) model), which has analysed historical token enrolment data stored by the network selector server 110 and/or the payment network 108.

Following the determination of the feature, the network selector server 110 selects 208 a 5G network slice 106a-c of a 5G network 106. The network selector server 110 may select a 5G network slice 106a-c over a plurality of 5G network slices of the 5G network 106. In this case, the selection of a specific 5G network slice 106a-c may be based on the feature of the Wi-Fi network 104. For example, the network selector server 110 may determine that, if the feature indicates a considerably high risk of the token enrolment request being eavesdropped, the 5G network slice 106a-c should be selected to be the 5G network slice with the highest security standard (i.e., the most advanced security mechanisms) amongst the slices available.

The determination 206 of the feature may comprise the step of identifying, at the network selector server 110, a parameter associated with the first token enrolment request message 204, wherein the parameter is indicative of a feature of the Wi-Fi network 104. For example, the step of sending the message instructing the user device 102 to connect to the 5G network slice 106a-c may be based on a comparison of the parameter associated with the first token enrolment request message 204 and a pre-determined parameter. For example, the network selector server 110 may request the user device 102 to connect to the 5G network slice 106a-c if and only if the parameter is above a certain pre-determined threshold. For instance, the parameter may be a number of cyber-attacks which have been successfully conducted against the Wi-Fi network 104 in the past year.

The network selector server 110 then sends 210 a message requesting the user device 102 to disconnect from the Wi-Fi network 104. By disconnecting the user device 102 from the Wi-Fi network 104, security may be enhanced, in case the Wi-Fi network 104 presented security risks.

The network selector server 110 then sends a message 212 requesting the user device 102 to connect to the 5G network slice 106a-c selected at step 208. The request is sent to the user device 102 in a message 212 generated at the network selector server 110. The message may further contain instructions to perform the token enrolment over the 5G network slice 106a-c. Messages 210 and 212 may occur simultaneously (such as through a single message, or through separate but simultaneously sent messages) or sequentially (as separate messages). The messages 210 and 212 are sent over the Wi-Fi network 104.

The user device 102 then disconnects 214 from the Wi-Fi network 104, in response to the request received at step 210. The user device 102 may notify the network selector server 110 that the user device 102 is disconnected from the Wi-Fi network 104 after step 214.

The user device 102 then connects 216 to a 5G network slice 106a-c of the 5G network 106. In some arrangements, the user device 102 sends a notification to the network selector server 110, confirming that the user device 102 has successfully connected to the 5G network slice 106a-c. The connection 216 to the 5G network 106 and the disconnection 214 from the Wi-Fi network 104 may be carried out simultaneously, or sequentially in any order.

The user device 102 then sends, over the 5G network 106, a second token enrolment request message 218. The second token enrolment request message 218 contains a request to perform a token enrolment of a payment card associated with the user device 102. The second token enrolment request message 218 may further comprise instructions to perform the token enrolment. The second token enrolment request message 218 may further comprise details of the user 101 (such as a retail customer), or details of the payment card. Preferably, the type of information is the same contained in the first token enrolment request message 204 (although the content of the information may be different as there is now a different network connection). The second token enrolment request message 218 comprises information concerning the 5G network slice 106a-c, for example the type of network the 5G network slice 106a-c is associated with, or an indication of the security mechanisms in place for the 5G network 106, a report of past eavesdropping incidents occurred on the 5G network slice 106a-c, or the like. In this way, the second token enrolment request message 218 may be used by the network selector server 110 to carry out a risk assessment of the 5G network slice 106a-c.

The network selector server 110 then determines 220 a feature of the 5G network slice 106a-c. For example, the feature may be related to the type of 5G network slice, or be indicative of the security mechanisms for that 5G network slice 106a-c, or be related to past security threats and/or cyber-attacks which have been carried out against the 5G network slice 106a-c. The feature may be a rate of network security threats and/or cyber-attacks which have been carried out successfully by nefarious actors against the 5G network slice 106a-c. In some arrangements, the feature may be related to the network traffic, or the network capability for performing a token enrolment of the 5G network slice 106a-c. In some examples, the 5G network slice 106a-c may be highly safe, but be unavailable because of high network traffic and/or because of a lack of capability to perform a token enrolment effectively. In some examples, the 5G network slice 106a-c may be safe, but not have the capability to perform a token enrolment within a certain, desired, period of time. The feature is preferably extracted from a header of the second token enrolment request message 218. However, any suitable means may be used to determine the feature of the 5G network slice 106a-c.

The network selector server 110 then determines 222, based on the feature of the 5G network slice 106a-c determined at step 220, whether to approve the second token enrolment request message. Approval of the second token enrolment request message means that the 5G network slice 106a-c is approved for processing the token enrolment contained in the second token enrolment request message (i.e., the token enrolment can be processed via the user device 102 over the 5G network slice). In some arrangements, step 222 may comprise the step of identifying, at the network selector server 110, a parameter associated with the second token enrolment request message, wherein the parameter is indicative of a feature of the 5G network slice 106a-c. For example, the network selector server 110 may determine that the second token enrolment request message is to be approved based on a comparison of the parameter associated with the second token enrolment request message and a pre-determined parameter. For example, the network selector server 110 may approve the second token enrolment request message if and only if the parameter is above a certain pre-determined parameter (i.e., a threshold). For instance, the parameter may be indicative of the number of successful token enrolment operations which have been conducted on the 5G network slice 106a-c over the past year.

In some arrangements, at step 222, the network selector server 110 may decide to not approve (i.e., disapprove) the second token enrolment request message. The disapproval of the second token enrolment request message means that the 5G network slice 106a-c is not approved for processing the token enrolment contained in the second token enrolment request message. The disapproval may be accompanied with a message (not shown) indicating that the second token enrolment request message is not approved. The network selector server 110 may therefore send this message to the user device 102, communicating that the second token enrolment request message is not approved. The network selector server 110 may then select a network as a further alternative to the 5G network slice, and instruct the user device 102 to connect to said further alternative network. In some arrangements, the network selector server 110 may also instruct the user device 102 to disconnect from the 5G network slice that has been disapproved. The steps of method 200 may be iterated until the network selector server 110 approves a token enrolment request message sent from the user device 102 over a final 5G network slice (where its associated feature meets the criteria that has been set for approval of a 5G network slice). Alternatively, the steps of method 200 may be iterated for a predetermined number of attempts, and, if at the end of the last iteration, the network selector server 110 has not approved the last 5G network slice, then the network selector server 110 will not proceed with the assessment of any further token enrolment request message from the user device 102. In some instances, the network selector server 110 may send a message to the user device 102, the message notifying the user device 102 that no further token enrolment request message will be assessed by the network selector server 110.

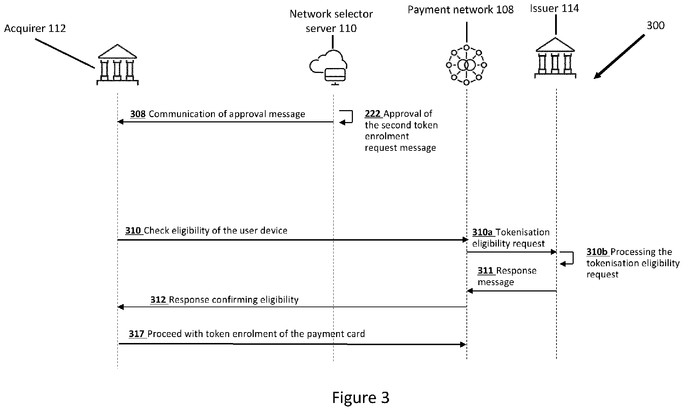

Figure 3 shows a method 300 following on from the method 200 illustrated in Figure 2, when providing authorisation to proceed with a token enrolment at the user device 102.

Method 300 starts after step 222 of method 200, illustrated in Figure 2, and as described above. The network selector server 110 approves 222 the second token enrolment request message, sent over the 5G network slice 106a-c. The network selector server 110 then sends, to the acquirer 112, a communication message 308 of the approval of the second token enrolment request message.

After receiving the communication message 308 of the approval of the second token enrolment request message, the acquirer 112 instructs 310 the payment network 108 to conduct an eligibility check of the payment card. Preferably, the assessment at step 222 is independent of the eligibility check 310. Preferably, the assessment of the token enrolment request messages carried out at the network selector server 110 is agnostic to the eligibility check 310 carried out by the payment network 108.

After receiving the instructions requesting the eligibility check 310 by the acquirer 112, the payment network 108 sends 310a a tokenisation eligibility request to an issuer 114, wherein the issuer 114 is a bank or other financial institution associated with the payment card for which token enrolment has been requested through the second token enrolment request message. The tokenisation eligibility request is then processed 310b by the issuer 114 via a typical eligibility check process, such as to determine the validity of the payment card (or payment instrument). The issuer sends a response message 311 to the payment network 108, as either a positive (eligible) or a negative (non-eligible) response message. However, a positive response message is only sent if the communication of approval message 308, as outlined above, has been received at the acquirer 112.

Once a positive response message 311 is sent to the payment network 108, a response message 312 is sent, from the payment network 108 to the acquirer 112, to confirm that the payment card is eligible for token enrolment.

The acquirer then sends 317, to the acquirer 112, a message to the payment network 108 requesting to proceed with the token enrolment of the payment card. The message 317 may contain instructions on how to perform token enrolment of the payment card.

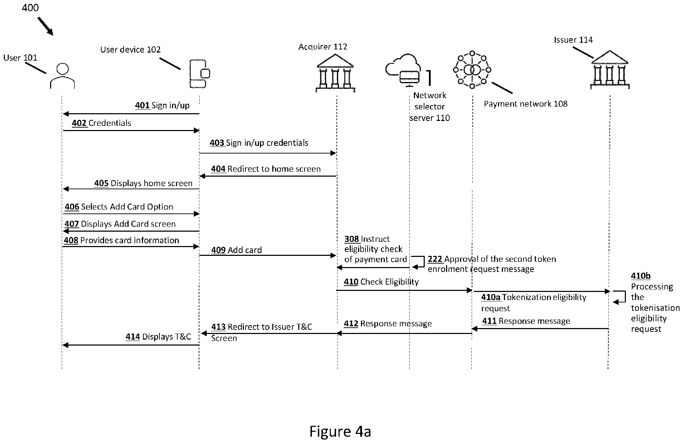

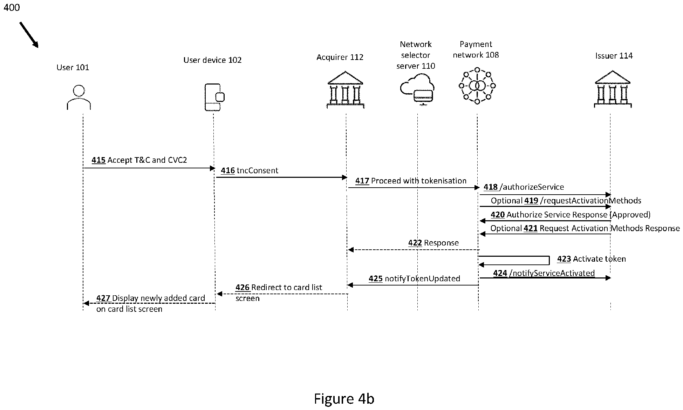

Figures 4a and 4b show a method 400 for providing means for registering a payment card at a user device 102, providing, at a network selector server 110, a secure network for token enrolment of the payment card, and for providing, at a payment network 108, authorisation for the token enrolment of the payment card. Figure 4a shows steps 401 to 414 of method 400, whilst Figure 4b shows steps 415 to 427 of method 400.

Starting with Figure 4a, the first steps of method 400 (from 401 to 409) concern the registration of a payment card belonging to a user 101 within the user device 102. Firstly, instructions are sent 401 from the user device 102 to the user 101 to sign in/sign up into, for example, a user account with a mobile application, the application being installed on the user device 102. The user 101 then submits their credentials into the user account of the mobile application. The submitted credentials are sent 403 to the acquirer 112, and after that, the user device 102 is re-directed 404 to a home screen of a website or of the mobile application. The user device 102 displays 405 the home screen to the user 101, who then chooses an option 407 to add details of a payment card into the account (i.e., to register the payment card into the user account) and submits 408 said details of the payment card into the account on the user device 102. From this point onwards, the user device 102 can send token enrolment request messages to the payment network 108, in order to request the tokenisation of the payment card. In other words, the first token enrolment request message 204 can be send to the payment network 108 after step 408. Finally, the user device 102 sends the payment card details to the acquirer 112. At the end of step 409, both the user device 102 and the acquirer 112, have stored, in respective memories, the payment card details and the user credentials. The payment card details comprise information, associated with the payment card, which identifies the bank account associated with the payment card. For example, the payment card details may comprise a Funding Primary Account Number (FPAN), which is a number, typically printed on the front of the physical payment card, identifying the cardholder. The payment card details may comprise a Device Primary Account Number (DPAN), i.e., a token which is specific to the user device. The DPAN may be converted into the corresponding FPAN. The payment card details may comprise a token, which is associated with a FPAN of the payment card. The payment card details may comprise any other piece of information which identifies the cardholder and the bank account associated with the payment card.

After the payment card details and the user credentials have been submitted 408 to the user device 102, the method 200 described in Figure 2 starts, with sending a first token enrolment request message 204 to the network selector server 110, as described above. At the end of method 200, as previously described, the network selector server 110 approves 222 the second token enrolment request message, sent over the 5G network slice 106a-c.

Network selector server 110 then sends, to the acquirer, instructions 308 to check the eligibility of the user device 102. The acquirer may conduct an eligibility check of the payment card detail, based on the details previously received from the user device 102 in steps 401 to 409. The acquirer 112 then sends, at step 410, instructions to the payment network 108 to perform another eligibility check on the user device 102. In some arrangements, an eligibility check at the acquirer and an eligibility check at the payment network 108 are conducted separately. Alternatively, the two eligibility checks are part of a single eligibility check. For instance, the acquirer 112 may conduct a first stage of the eligibility check (for instance, by checking the payment card details) and then the payment network 108 conducts a further, possibly more detailed eligibility check of the user and/or the user device 102, based on the credentials received 403 by the acquirer 112 and then sent to the payment network 108.

After receiving instructions to conduct an eligibility check, the payment network 108 sends 410a a request for tokenisation eligibility to the issuer 114. Upon approval 411 of the tokenisation eligibility request, a number of steps 412-416 occur, related to the issuance/signature of Terms and Conditions (T&Cs) through the user device 102. Figure 4b illustrates steps from 415 to 427. At step 417, the payment card is digitised, i.e., a tokenised card correspondent to the payment card is created. Steps 418 to 427 relate to the activation of the card token, and the notification of the activation of the card token from the issuer 114 to the user device 102. A command (e.g., /authorizeService), may be launched by the payment network 108 which instructs the payment network 108 to request the authorisation of the activation of the tokenised card to the issuer 114. Optionally, further authentication may be required 419 in order for the issuer 114 to authorise the activation of the tokenised card. The issuer 114 then sends two responses 420, 421, respectively, requests 418 and 419, to the payment network 108. The payment network 108 then launches 424 a command (e.g., /notifyServiceActivated) instructing the payment network 108 to send, to the issuer 114, a notification that the provisioning and activation of the tokenised card has been completed. The payment network 108 therefore launches 425 a command (e.g., /notifyTokenUpdated) which instructs the payment network 108 to notify the acquirer 112 of any significant token updates (e.g., the token has been suspended, or deleted, or when information about the token has changed).

In alternative arrangements, step 222 of method 200 (illustrated in Figure 2) may occur after the completion of step 416, i.e., after the signature of the T&Cs from the user 101. Advantageously, the method 200 and steps 410 to 416 can occur in parallel to one another, which may improve efficiency and optimise computational resources during token enrolment procedures. The determination, at step 222 of method 200, of whether the second token enrolment request message should be approved, may be decoupled from steps 410 to 412, in which the eligibility of the payment card is checked by the payment network 108, the issuer 114 and the acquirer 112. Preferably, method 200 is agnostic to the way steps 401 to 427 are applied, which has the advantage of making the claimed method easy to adapt to different payment methods, and therefore highly versatile.

In some arrangements, method 200 does not start until after completion of the eligibility checks on the user device 102 (i.e., after completion of step 412). In some arrangements, if the eligibility checks reveal that the payment card and/or the user is not eligible for token enrolment, then the network selector server 110 may not start the assessment of the first token enrolment request message 204. In this way, the network selector server 110 will assess the communication network 104 only if the first token enrolment request message has been sent by a user device 102 which is deemed eligible for token enrolment. In this way, the resources of the network selector server 110 may not be used for every user device 102 which submits a request for token enrolment to the network selector server 110. An advantage of this approach is that it might reduce the demand for computational resources to be used during the token enrolment processes.

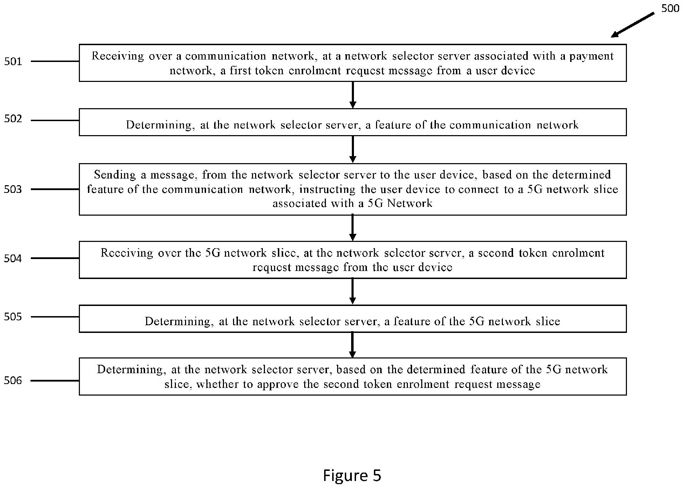

Figure 5 shows an example computer-implemented method 500, performed by the network selector server 110, for providing a secure token enrolment of a payment card of the user 101 at the user device 102.

At step 501, a first token enrolment request message, is received over a communication network 104, at a network selector server 110 associated with a payment network 108, from a user device 102.

At step 502, a feature of the communication network 104 is determined, at the network selector server 110.

At step 503, a message sent by the network selector server 110, is sent to the user device 102. Said request message instructs the user device 102 to connect to a 5G network slice 106a-c associated with a 5G network 106.

At step 504, a second token enrolment request message, is received over the 5G network slice 106a-c, at the network selector server 110, from the user device 102.

At step 505, a feature of the 5G network slice 106a-c is determined at the network selector server 110.

At step 506, it is determined, at the network selector server 110, whether to approve the second token enrolment request message, based on the determined feature of the 5G network slice 106a-c.

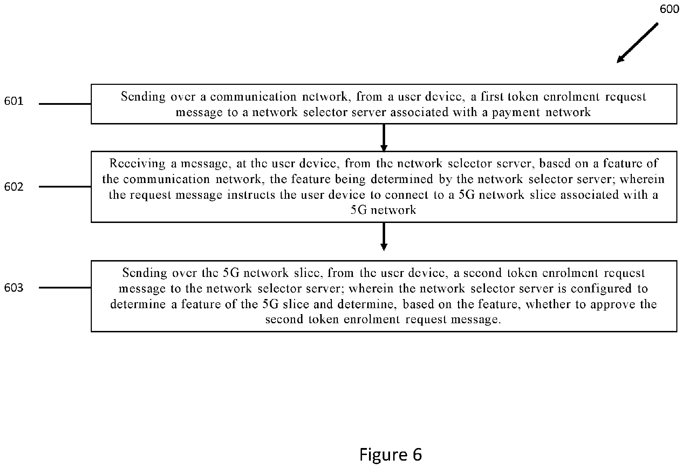

Figure 6 shows an example computer-implemented method 600, performed by the user device 102, for providing a secure token enrolment of a payment card of the user 101 the user device 102.

At step 601, a first token enrolment request message, is send, from a user device 102, over a communication network 104, to a network selector server 110 associated with a payment network 108.

At step 602, the user device 102 receives a request message from the network selector server 110. The request message instructs the user device 102 to connect to a 5G network slice 106a-c of a 5G network 106, based on a feature of the communication network 104, the feature being determined, at the network selector server 110.

At step 603, the user device 102 sends, over the 5G network slice 106a-c, a second token enrolment request message to the network selector server 110, wherein the network selector server 110 is configured to determine a feature of the 5G network slice 106a-c and determine, based on said feature, whether to approve the second token enrolment request message.

It will be appreciated that any of the methods described herein, and any step of the methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of any method may be implemented by different processors that are all collectively acting in accordance with computer-readable instructions stored on one or more storage media. The processor(s) may be component(s) of system, for example a processor of a device.

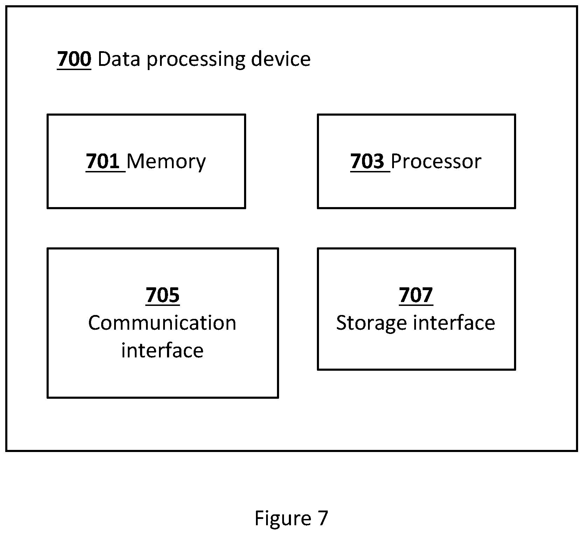

Similarly, any steps of any of the methods described herein may be performed by data processing devices. By way of example, Figure 7 shows in schematic form a data processing device 700 that is suitable for performing the functions of the network selector server 110, and/or the user device 102, and/or any of the payment network 108, a server of the communication network 104 and a server of the 5G network 106. The data processing device 700 may automatically perform any of the methods described herein.

Data processing device 700 includes a processor 703 for executing instructions. Instructions may be stored in a memory 701. Processor 703 may include one or more processing units (e.g., in a multi-core configuration) for executing instructions. The instructions may be executed within a variety of different operating systems on the data processing device 700, such as UNIX, LINUX, Microsoft Windows^{®}, etc. More specifically, the instructions may cause various data manipulations on data stored in memory 701 (e.g., create, read, update, and delete procedures). It should also be appreciated that upon initiation of a computer-implemented method, various instructions may be executed during initialization. Some operations may be required to perform one or more methods described herein, while other operations may be more general and/or specific to a particular programming language (e.g., C, C#, C++, Java, or other suitable programming languages, etc.).

Processor 703 is operatively coupled to a communication interface 705 such that data processing device 700 can communicate with a remote device, such as another data processing device of the system. For example, communication interface 705 may receive communications from another member of the system.

Processor 703 may also be communicatively coupled to a storage device such as a database, depending on the function of data processing device 700 within the context of the system. The storage device is any computer-operated hardware suitable for storing and/or retrieving data, where in the case of a secure storage medium the data is stored and retrieved securely.

The storage database may be external to data processing device 700 and located remotely. Alternatively, it can be integrated in data processing device 700. For example, data processing device 700 may include memory 701 as one or more hard disk drives acting as a storage database. Alternatively, where the storage database is external to data processing device 700, it can comprise multiple storage units such as hard disks or solid-state disks in a redundant array of inexpensive disks (RAID) configuration. The storage database may include a storage area network (SAN) and/or a network attached storage (NAS) system.

Processor 703 can be operatively coupled to the storage device (storage database) via a storage interface 707. Storage interface 707 is any component capable of providing processor 703 with access to the storage device. Storage interface 707 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 703 with access to the storage device.

Memory 701 may include, but is not limited to, RAM such as dynamic RAM (DRAM) or static RAM (SRAM), ROM, erasable programmable read-only memory (EPROM), electrically erasable programmable read-only memory (EEPROM), and non-volatile RAM (NVRAM). The above memory types are exemplary only and are not limiting as to the types of memory usable for storage of a computer program.

As used herein, the term "non-transitory computer-readable media" is intended to be representative of any tangible computer-based device implemented in any method or technology for short-term and long-term storage of information, such as, computer-readable instructions, data structures, program modules and sub-modules, or other data in any device. The methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Furthermore, as used herein, the term "non-transitory computer-readable media" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the specification herein, the above-described arrangements of the disclosure may be implemented using computer programming or engineering techniques including computer software, firmware, hardware or any combination or subset thereof. Any such resulting program, having computer-readable code means, may be embodied, or provided within one or more computer-readable media, thereby making a computer program product, i.e., an article of manufacture, according to the discussed arrangements of the disclosure. The article of manufacture containing the computer code may be made and/or used by executing the code directly from one medium, by copying the code from one medium to another medium, or by transmitting the code over a network.

While the disclosure has been described in terms of various embodiments, the person skilled in the art will recognise that the disclosure can be practiced with modification within the spirit and scope of the claims.

The 5G network slice can be created through different network slicing techniques, such as hard network slicing (or static network slicing), soft network slicing (i.e., dynamic network slicing), enhanced Mobile Broadband (eMBB), Massive Machine-Type Communication (mMTC), Ultra-Reliable Low-Latency Communications (URLLC). Hard network slicing involves the creation of network slices which are strictly isolated, i.e., optimised to a specific use. Hard network slicing ensures that specific resources or protocols are assigned to specific network slices only. For instance, only one specific 5G network slice might be dedicated to process token enrolment and token enrolment requests. Soft network slicing assigns resources to network slices with a more flexible approach. Under this approach, network resources might be shared amongst different slices based, for example, on real-time demand caused by the evolution of system requirements. Under this approach, token enrolment might not be processed exclusively by one 5G network slice. In dynamic slicing, a 5G network slice may be created and destroyed after a pre-determined lifetime. Other types of network slicing, such as mMTC or URLLC can be used in instances where vast quantities of interconnected devices are connected to a network and where real-time response and low latency are paramount.

Although the system illustrated in Figure 1 has been shown to have one user device 102, in alternative arrangements, multiple user devices may be connected to either the communication network 104 or the 5G network slice 106a-c of the 5G network 106, or both. In some arrangements, multiple payment networks 108 are connected to a network selector server 110. In other alternative arrangements, multiple network selector servers 110 are connected to a single payment network 108. Multiple payment networks 108, multiple network selector servers 110, and multiple user devices 102 may all be present in the system.

In some arrangements, the feature of either the first or the second token enrolment request message is related to the user device 102 from which, respectively, the first or the second token enrolment request message has been sent. For instance, the feature may be indicative of a type of user device 102, or indicative of the security mechanisms of the user device 102 for protection against cyber-attacks, or it may be indicative of the type of networks which the user device 102 can connect to. This type of feature may be useful to the network selector server 110, if, for example, the user device 102 is configured to connect to the 5G network 106 or to the 5G network slice 106a-c of the 5G network 106. The network selector server 110 may therefore know that the user device 102 must be requested to connect to an alternative type of network (for example, a 4G network). In some arrangements, the feature (either associated with the first token enrolment request message sent over the communication network 104, or associated with the second token enrolment request message, sent over the 5G network slice 106a-c of the 5G network 106) may be related to the token enrolment. For instance, the feature may be related to details of the token enrolment for which the request has been sent, such as the payment card details, or details of the user 101 requesting the enrolment. In some arrangements, more than one feature is determined for each of the first and second token enrolment request message. In some arrangements, the feature may be related to more than one characteristic of the token enrolment and/or the network and/or other factors such as factors related to the user device 102.

In some arrangements alternative to the method 300 illustrated in Figure 3, step 222 occurs after step 310, but before step 312. In some arrangements, if the eligibility check reveals that the user device 102 is not eligible for token enrolment, step 222 does not occur. In this way, fewer steps are required in case the user device 102 is not eligible for token enrolment, which may improve efficiency. In other instances, however, it may be advantageous to perform, through the network selector server 110, an assessment of the token enrolment request messages (such as, for example, method 200 of Figure 2) independently of the outcome of the eligibility check conducted by the payment network 108. Ideally, the method steps for assessing the safety and availability of the network carried out by the network selector server 110 are entirely agnostic to the token enrolment method and system. In this way, the computer-implemented method carried out by the network selector server 110 may be integrated with any token enrolment computer-implemented method without requiring any alteration of said token enrolment computer-implemented method.

## Claims

1. A computer-implemented method for providing secure token enrolment, the method comprising:
receiving over a communication network, at a network selector server associated with a payment network, a first token enrolment request message from a user device;
determining, at the network selector server, a feature of the communication network;
sending a message, from the network selector server to the user device, based on the determined feature of the communication network, instructing the user device to connect to a 5G network slice associated with a 5G Network;
receiving over the 5G network slice, at the network selector server, a second token enrolment request message from the user device;
determining, at the network selector server, a feature of the 5G network slice;
determining, at the network selector server, based on the determined feature of the 5G network slice, whether to approve the second token enrolment request message.

2. The computer-implemented method of claim 1, further comprising the step of:
approving, at the network selector server, based on the feature of the 5G network slice, the second token enrolment request message.

3. The computer-implemented method of any preceding claim, further comprising the step of:
sending, from the network selector server to the payment network, instructions to perform the token enrolment.

4. The computer-implemented method of any preceding claim, wherein determining a feature of the communication network comprises the steps of:
identifying, at the network selector server, a parameter associated with the token enrolment request message, wherein the parameter is indicative of the feature of the communication network.

5. The computer-implemented method of claim 4, wherein, sending the request message instructing the user device to connect to the 5G network slice is based on a comparison of the parameter and a pre-determined parameter.

6. The computer-implemented method of any preceding claim, wherein determining a feature of the 5G network slice comprises the steps of:
identifying, at the network selector server, a parameter associated with the second token enrolment request message, wherein the parameter is indicative of the feature of the 5G network slice; and optionally
wherein determining whether to approve the second token enrolment request message is based on a comparison of the parameter to a pre-determined parameter.

7. The computer-implemented method of any preceding claim, wherein the Network Selector server selects the 5G network slice based on a characteristic of the 5G network slice.

8. The computer-implemented method of claim 7, wherein the characteristic of the 5G network slice is a single-network slice selection assistance information.

9. The computer-implemented method of any preceding claim, wherein a feature of the communication network is one of a feature indicative of security, a feature indicative of network traffic or a feature indicative of network capability; and/or wherein a feature of the 5G network slice is one of a feature indicative of security, a feature indicative of network traffic or a feature indicative of network capability.

10. The computer-implemented method of any preceding claim, further comprising the step of:
sending instructions, from the network selector server to the user device, instructing the user device to disconnect from the communication network.

11. The computer-implemented method of any preceding claim, wherein the communication network is a Wi-Fi network.

12. The computer-implemented method of any preceding claim, wherein the network selector server is part of the payment network.

13. A system for providing secure token enrolment, the system configured to perform the method steps of any of claims 1 to 12.

14. A non-transitory computer-readable medium comprising instructions which, when executed by a computer, cause the computer to carry out the method steps of any claim 1 to 12.

15. A computer-implemented method for providing secure token enrolment, the method comprising:
sending over a communication network, from a user device, a first token enrolment request message to a network selector server associated with a payment network;
receiving a request message, at the user device, from the network selector server, based on a feature of the communication network, the feature being determined at the network selector server, wherein the request message instructs the user device to connect to a 5G network slice associated with a 5G network; and
sending over the 5G network slice, from the user device, a second token enrolment request message to the network selector server;
wherein the network selector server is configured to determine a feature of the 5G network slice and determine, based on the feature of the 5G network slice, whether to approve the second token enrolment request message.
